# Europäisches Patentamt
# European Patent Office
# Office européen des brevets

(19)

(11) Numéro de publication: **0 179 507**
**B1**

(12) FASCICULE DE BREVET EUROPEEN

(45) Date de publication du fascicule du brevet: **27.12.90**

(51) Int. Cl.⁵: **G 02 B 6/12**, G 02 B 6/26

(21) Numéro de dépôt: **85201514.8**

(22) Date de dépôt: **20.09.85**

(54) Dispositif de couplage entre des guides d'onde, monolithiquement intégré avec ceux-ci sur un substrat semi-conducteur.

(30) Priorité: **25.09.84 FR 8414683**

(43) Date de publication de la demande:
**30.04.86 Bulletin 86/18**

(45) Mention de la délivrance du brevet:
**27.12.90 Bulletin 90/52**

(84) Etats contractants désignés:
**DE FR GB NL**

(56) Documents cités:
**US-A-4 130 342**

**PATENTS ABSTRACTS OF JAPAN, vol. 2, no. 77, 17 juin 1978, page 3168 E 78; & JP - A - 53 42 741
PATENTS ABSTRACTS OF JAPAN, vol. 2, no. 153, 22 décembre 1978, page 9764 E 78; & JP - A - 53 120 452**

**BELL SYSTEM TECHNICAL JOURNAL, vol. 48, no. 7, septembre 1969, pages 2059-2069; S.E. MILLER: "Integrated optics: An introduction"**

(73) Titulaire: **LABORATOIRES D'ELECTRONIQUE PHILIPS
3, Avenue Descartes
F-94450 Limeil-Brévannes (FR)**
(84) **FR**

(73) Titulaire: **N.V. Philips' Gloeilampenfabrieken
Groenewoudseweg 1
NL-5621 BA Eindhoven (NL)**
(84) **DE GB NL**

(72) Inventeur: **Erman, Marko
Société Civile S.P.I.D. 209 rue de l'Université
F-75007 Paris (FR)**
Inventeur: **Theeten, Jean-Bernard
Société Civile S.P.I.D. 209 rue de l'Université
F-75007 Paris (FR)**
Inventeur: **Vodjdani, Nakita
Société Civile S.P.I.D. 209 rue de l'Université
F-75007 Paris (FR)**

(74) Mandataire: **Landousy, Christian et al
Société Civile S.P.I.D. 156, Boulevard Haussmann
F-75008 Paris (FR)**

Courier Press, Leamington Spa, England.

EP 0 179 507 B1

(56) References cited:

**APPLIED PHYSICS LETTERS, vol. 30, no. 6 15 mars 1977, pages 293-295, American Institute of Physics; W.T. TSANG et al.: "Growth of GaAs-Ga1-xAlxAs over preferentially etched channels by molecular beam epitaxy:A technique for two-dimensional thin-film definition"**

**OPTICS COMMUNICATIONS, vol. 46, nos. 3,4, juillet 1983, pages 164-166, North-Holland, Amsterdam, NL; A.J.N. Houghton et al.: "Low-loss optical waveguides in MBE-grown GaAs/GaAlAs heterostructures"**

**ELECTRONICS LETTERS, vol. 18, no. 19, 16 septembre 1982, pages 850-852; P. BUCHMANN et al.: "Optical Y-junctions and S-bends formed by preferentially etched single-mode rib waveguides in InP"**

## Description

L'invention concerne une structure de couplage entre un guide d'onde lumineuse principal et deux guides d'onde lumineuse secondaires intégrés sur un substrat, telle que définie dans le preamble de la revendication 1.

L'invention concerne également des dispositifs semiconducteurs incluant cette structure de couplage et monolithiquement intégrés avec cette derniere.

L'invention concerne enfin un procédé de réalisation de cette structure de couplage et des dispositifs semiconducteurs.

A titre d'exemple d'application de l'invention, on peut citer la réalisation de modulateurs intégrés sur un substrat en arséniure de gallium, pour des sources de lumière telles que les lasers, et destinés à fonctionner à des fréquences très élevées, de l'ordre de 5 à 10 GHz, pour être utilisés dans le domaine des télécommunications. On peut encore citer la réalisation de cavités lasers, également intégrées sur arséniure de gallium.

Une telle structure de couplage entre guides d'onde lumineuse est connue par la publication intitulée: "The Bell System Technical Journal", Vol. 48, N° 7, Septembre 1969, pages 2059—2069, qui décrit une structure de couplage entre un guide principal et des guides secondaires intégrés sur un substrat, constituée par une lame à faces parallèles entre elles et perpendiculaires au substrat, cette lame étant susceptible d'être constituée par une fente exempte de matériau ou une région diélectrique à indice élevé. Ce dispositif est réalisé en verre.

Une structure similaire est en outre connue de l'abrégé JP—A—53 120 452 tiré de "Patents abstracts of Japan". Ce document montre des guides de section rectangulaire érigés au-dessus de la surface du substrat. Le guide d'entrée est muni d'une rainure transversale pratiquée sous un angle approprié à réfléchir une partie de la lumière en direction d'un guide secondaire placé à angle droit ou faisant un grand angle avec le guide d'entrée, cette rainure exempte de matériau étant en outre prévue d'une largeur appropriée pour permettre la transmission d'une partie de la lumière vers le deuxième guide secondaire disposé dans le prolongement du guide d'entrée.

Ce dispositif est réalisé en quartz. La rainure présente une profondeur de la même dimension que la hauteur dont les guides sont érigés au-dessus du substrat.

Une structure de couplage réalisée en matériau semiconducteur est encore connue de la publication dans Electronics Letters (16th September 1982, Vol. 18 n° 19, pp. 850—852) intitulée "Optical Y-junctions and S-bends formed by preferentially etched single-mode RIB waveguides in InP".

Ce document décrit une structure séparatrice de faisceaux lumineux réalisée à l'aide de guides d'onde intégrés sur un substrat en phosphure d'indium et constituée par une jonction en forme de Y, cette structure est obtenue par croissance épitaxiale d'une couche de type n⁻ sur un substrat de type n⁺, et par une attaque chimique de cette couche dans les ouvertures d'un masque. Après l'attaque chimique, la structure séparatrice de faisceaux apparaît en relief au-dessus de la couche de type n⁻ partiellement décapée. Les guides ont une section rectangulaire et leurs faces externes sont réalisées aussi lisses que possible pour améliorer le confinement de la lumière. L'angle d'ouverture des branches de la jonction est de l'ordre de 0,9°.

Ce dispositif connu présente de nombreux inconvénients. D'abord, malgré la faible ouverture des branches de la jonction Y, les pertes dues au principe physique même ajoutées aux pertes dues au procédé de réalisation, atteignent une valeur très élevée de l'ordre de 4 dB. Ensuite, du fait de cette faible ouverture, les branches de la jonction sont nécessairement d'une grande longueur, qui peut atteindre 2 mm, afin que les guides d'onde couplés à leur extrémité soient suffisamment éloignés l'un de l'autre et n'interfèrent pas. Il en résulte que les dispositifs réalisés à l'aide d'une ou plusieurs de ces structures présentent des dimensions importantes. En outre, le guide principal d'une telle structure ne peut admettre plusieurs modes simultanément, car la conversion de mode fournie par la jonction en Y n'est pas compatible avec cen fonctionnement. Enfin, lorsque cette structure est utilisée pour la recombinaison de faisceaux, si les faisceaux qui entrent sur les branches du Y sont en phase, alors la lumière sort bien, en effet, par le guide principal; mais si les faisceaux qui entrent sont en opposition de phase, alors leur recombinaison donne un mode optique d'ordre plus élevé -autre que le mode fondamental- qui ne suit pas le guide principal et rayonne dans le substrat. Le signal est dans ce cas perdu. Par conséquent, une telle structure ne peut être utilisée pour réaliser un interféromètre du type dit "Michelson" par exemple.

C'est pourquoi, la présente invention vise à fournir une structure de couplage, qui est dépourvu de ces inconvénients.

Selon l'invention, ce problème est résolu par une structure telle que définie dans le préambule, caractérisée en ce que les guides sont en un matériau semiconducteur et sont intégrés sur un substrat semiconducteur formant ou muni d'une couche de confinement, en ce que la section utile de la lame est inférieure à la section du guide principal pour permettre la propagation directe d'une partie du faisceau lumineux issu du guide principal dans le guide secondaire placé dans le prolongement du guide principal, et en ce que la lame présente un indice de réfraction inférieur à l'indice du guide principal et une épaisseur appropriée de façon à assurer la réflexion totale du faisceau incident qu'elle reçoit, formant ainsi un miroir à réflexion totale orienté pour réfléchir la partie du faisceau issu du faisceau principal qui frappe ce miroir vers l'autre guide secondaire.

Dans ces conditions, le dispositif de couplage présente de nombreux avantages. D'abord les pertes sont faibles. Ensuite ce dispositif est de très petites dimensions, seulement légèrement supérieures à la section des guides d'onde. En outre, la lame à faces parallèles séparant un faisceau principal en au plus deux faisceaux, l'un transmis, l'autre réfléchi, les intensités de chacun des faisceaux peuvent être choisies en fonction de l'angle d'incidence du faisceau principal, de l'épaisseur de la lame et de son indice. A cet effet de nombreux matériaux peuvent être utilisés pour former la lame allant des diélectriques aux différents semiconducteurs permettant ainsi de disposer d'éléments présentant toutes sortes d'indices de réfraction différents. Enfin, quel que soit le déphasage entre des faisceaux incidents, les faisceaux de sortie sont toujours parallèles au substrat et peuvent donc être transportés par des guides d'onde.

L'invention sera mieux comprise à l'aide de la description suivante illustrée par les figures annexées dont:

les figures 1a, 1b, 1c qui montrent, vu du dessus, les trajets des faisceaux lumineux dans un dispositif illustratif de l'état de la technique où le flux d'entrée est totalement reçu par la lame, respectivement, dans le cas où la lame à faces parallèles présente un indice de réfraction supérieur à celui des guides d'onde, dans le cas où la lame présente un indice légèrement inférieur à celui des guides, et dans le cas où la lame présente un indice très inférieur à celui des guides,

la figure 1d qui montre, vu du dessus, les trajets des faisceaux lumineux dans la structure selon l'invention où le flux d'entrée est seulement partiellement reçu par la lame.

La figure 2a qui montre en coupe simplifiée un dispositif illustratif de l'état de la technique muni d'une lame pour recevoir entièrement le faisceau d'entrée, et la figure 2b qui montre en coupe simplifiée la structure selon l'invention munie d'une lame pour recevoir partiellement le faisceau incident.

Les figures 3a, 3b, 3c qui montrent, vue du dessus les trajets des faisceaux lumineux pour deux entrées dans les cas respectifs cités précédemment.

Les figures 4a, 4b, 4c, 4d, 4e, qui montrent, vue du dessus, respectivement, un interféromètre du type dit ''Mach-Zehnder'', un interféromètre du type ''Michelson'', un interféromètre en anneau, un interféromètre ''Mach-Zehnder'' couplé avec une source laser, et un laser en anneau, réalisés à l'aide de dispositifs cités précédemment.

Les figures 5a, 5b, 5c, 5d, et 5e qui représentent, vues du dessus, les différentes étapes d'un procédé de réalisation de dispositifs cités précédemment.

Les figures 6a, 6b, 6c et 6d qui représentent, en coupe transversale selon l'axe AA' de la figure 5e, des guides d'onde dans différentes technologies de fabrication, et les figures 7a, 7b, 7c et 7d qui représentent en coupe transversale selon l'axe BB' de la figure 5e les différents dispositifs obtenus à partir de tels guides.

Les figures 8a, 8b, 8c et 8d qui montrent en coupe transversale selon l'axe BB' de la figure 5e les différentes structures selon l'invention obtenues à partir de tels guides lorsque la lame est à la fois une lame dépourvue de matériau et une lame partielle.

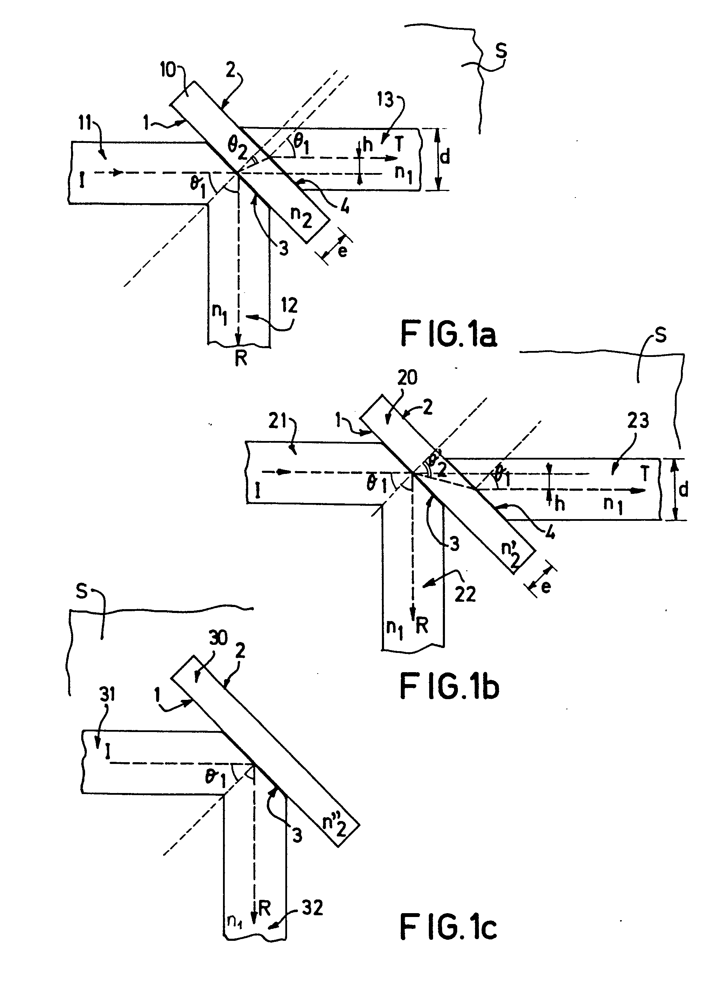

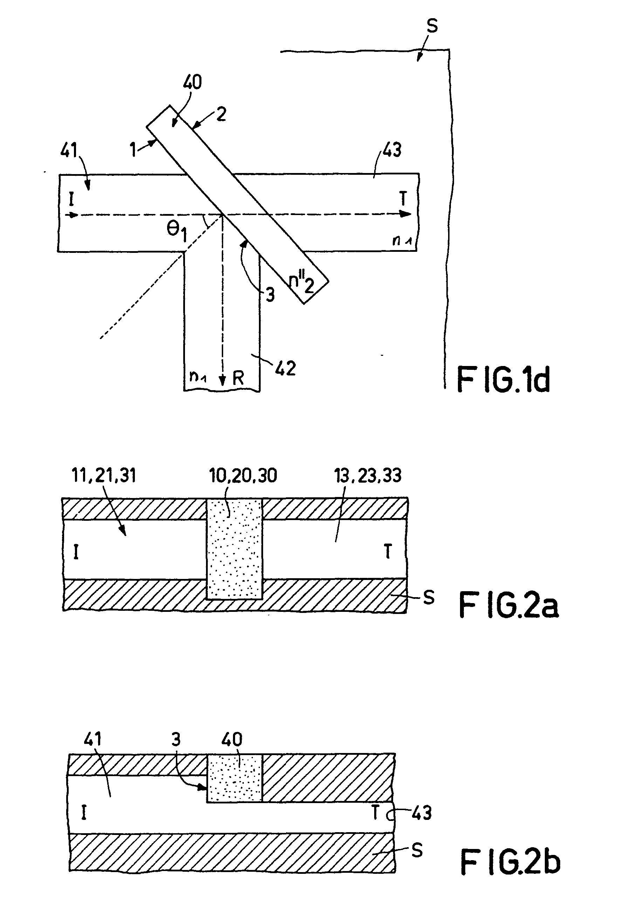

Tel que est représenté sur les figures 1a, 1b et 1c (respectivement sur la figure 1d), un dispositif de couplage illustratif de l'état de la technique (respectivement la structure de couplage selon l'invention) est forme d'une lame portant les repères respectifs 10, 20 et 30 (resp. 40), réalisée perpendiculairement à un substrat semi-conducteur S et présentant des faces parallèles 1 et 2. Cette lame reçoit sous un angle $\theta_1$ un faisceau incident I transporté par le guide d'onde principal respectivement repéré 11, 21 et 31 (resp. 41). La face de sortie du guide d'onde principal est taillée de manière à ce que la face d'entrée 1 de la lame constitue le dioptre 3 de séparation entre le milieu constituant le guide d'indice de refraction n1 et le milieu constituant la lame d'indice de réfraction $n_2$. Plusieurs cas se présentent alors.

A titre d'exemple, la figure la montre la trajet des faisceaux lumineux dans le cas où la lame à faces parallèles 10 présente un indice $N_2$ supérieur à l'indice $N_1$ du guide d'onde principal 11. Le faisceau indicent I est totalement reçu par la lame et séparé par celle-ci en deux faisceaux, l'un réfléchi R et l'autre réfracté et transmis T. Le faisceau R est réfléchi sous l'angle $\theta_1$ et transporté par le guide secondaire de sortie 12. Le faisceau T est réfracté dans la lame sous l'angle $\theta_2 < \theta_1$, sort de la lame sous l'angle $\theta_1$ et est transporté par le guide secondaire de sortie 13. La face d'entrée des guides secondaires de sortie 12 et 13 est taillée de manière à ce que les faces en regard 1 et 2 de la lame à faces parallèles constituent les dioptres respectivement 3 et 4 de séparation entre le milieu constituant les guides et le milieu constituant la lame.

A titre d'exemple, la fire 1b montre le trajet des faisceaux lumineux dans le cas où la lame à faces parallèles 20 présente un indice $n'_2$ légèrement inférieur à l'indice $n_1$ du guide d'onde principal 21. Le faisceau incident I est totalement reçu par la lame et séparé par celle-ci en deux faisceaux, l'un réfléchi R et l'autre réfracté et transmis T. Le faisceau R est réfléchi sous l'angle $\theta_1$ et transporté par le guide secondaire de sortie 22. Le faisceau T est réfracté dans la lame sous l'angle $\theta_2 > \theta_1$, sort de la lame sous l'angle $\theta_1$ et est transporté par le guide secondaire de sortie 23.

Dans les deux cas précédents, le déplacement $h$ du faisceau transmis T par rapport à l'axe du faisceau incident est d'autant plus important que les indices des deux milieux sont différents et que l'épaisseur de la lame est plus grande.

D'autre part, les guides secondaires de sortie présentent dans tous les exemples cités dans cette description le même indice de réfraction que le guide principal, ce qui n'est pas indispensable et n'a été choisi que pour des raisons de simplicité de la description.

A titre d'exemple, la figure 1c montre le trajet des faisceaux lumineux dans le cas où la lame à faces parallèles 30 présente un indice $n''_2$ très inférieur à l'indice $n_1$ du guide principal 31. Le faisceau incident I, qui est totalement reçu par la lame, subit alors une réflexion totale sous un angle $\theta_1$ et donne naissance au faisceau réfléchi R transporté par le guide secondaire de sortie 32.

Les intensités respectives des faisceaux réfléchis et transmis sont fonction de l'angle d'incidence $\theta_1$, de l'épaisseur $e$ de la lame à faces parallèles et de l'indice de cette dernière. En particulier pour un angle d'incidence donné, choisi souvent de 45° pour de nombreuses applications, des valeurs de 50% pour les intensités relatives du faisceau réfléchi et du faisceau transmis peuvent être facilement obtenues en jouant simplement sur l'indice de la lame et son épaisseur. D'autre part, on notera que le calcul réaliste de l'intensité de l'onde réfléchie et transmise doit prendre en compte l'effet d'interférence dans la lame à faces parallèles.

Enfin, dans le cas où l'indice de la lame est très inférieur à celui des guides (figure 1c), on obtient bien une réflexion totale si l'épaisseur $e$ de la lame est grande, quelques µm. Mais si elle est faible de l'ordre du µm ou inférieure au µm, l'onde évanescente dans la lame donne naissance à un faisceau transmis dont l'intensité peut être relativement importante.

Selon l'invention, la figure 1d montre le trajet des faisceaux lumineux dans le cas où la lame à faces parallèles 40 présente un indice de réfraction $n''_2$ très inférieur à l'indice $n_1$ du guide principal 41. Mais la lame à faces parallèles 40 est prévue de telle sorte qu'elle ne reçoit qu'une partie du flux incident, la partie restante du faisceau ne rencontrant pas la lame.

La figure 2b montre en coupe simplifiée au niveau de la lame 40, que la structure selon l'invention est alors telle que la section utile de la lame 40 ne couvre pas la totalité de la section du guide d'onde principal 41, comme elle le faisait dans le cas illustratif de l'état de la technique des figures 1a, 1b et 1c, dont la coupe simplifiée au niveau de la lame à face parallèle, alors référencée 10 ou 20 ou 30 respectivement, est représentée à titre d'exemple sur la figure 2a.

Selon l'invention, dans le cas de la figure 1d, la partie du faisceau qui est reçue par la lame à faces parallèles 40 subit une réflexion totale sous l'angle $\theta_1$, et donne naissance au faisceau réfléchi R transporté par le guide secondaire de sortie 42. La partie du faisceau incident I qui ne rencontre pas la lame à faces parallèles 40, est purement transmise et donne naissance au faisceau de sortie T, transporté par le guide secondaire de sortie 43.

Cette façon de séparer le faisceau incident en deux faisceaux de sortie est particulièrement avantageuse du fait que la lame à faces parallèles 40, dont l'indice $n''_2$ est choisi très inférieur à l'indice $n_1$ des guides, peut être réalisée au moyen d'une simple lame dépourvue de matériau, de section utile inférieure à cell du guide principal 41.

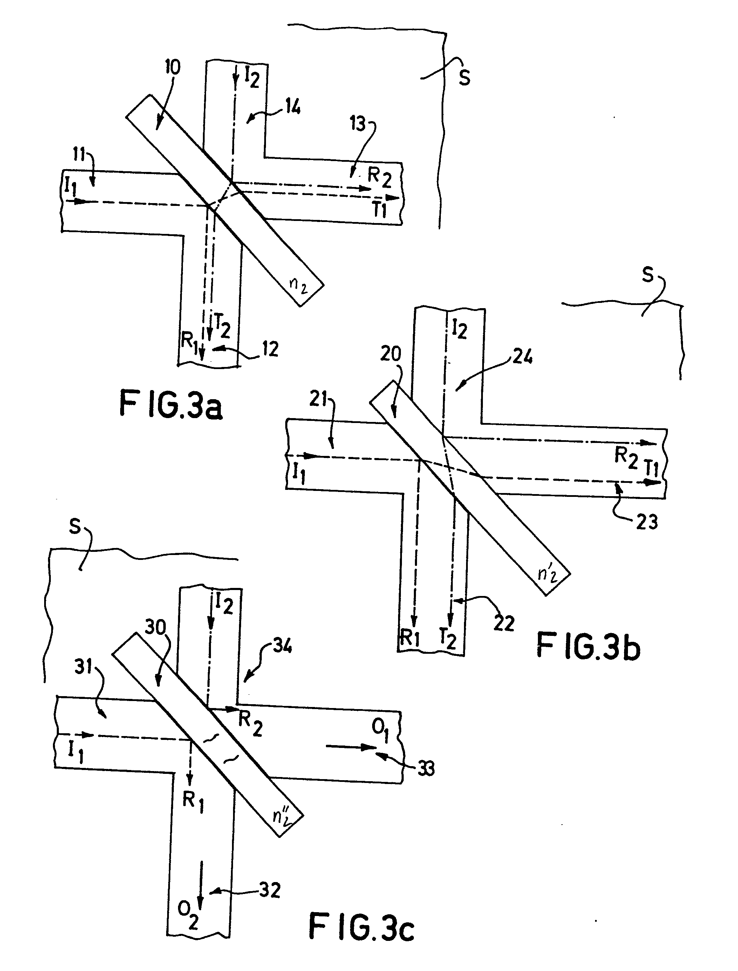

Tel que représenté sur les figures 3a, 3b, 3c, un dispositif de couplage donné à titre d'exemple illustratif de l'état de la technique est formé des lames décrites précédemment, respectivement repérées 10, 20 et 30 et reçoit deux faisceaux incidents $I_1$ et $I_2$.

Dans le premier exemple, la figure 3a montre le trajet des faisceaux lumineux, la lame 10 présentant un indice $n_2$ supérieur à l'indice $n_1$ des guides 11 ete 14 qui transportent les faisceaux incidents $I_1$ et $I_2$ respectivement. Ces derniers donnent naissance chacun à un faisceau réfléchi et un faisceau transmis, respectivement $R_1$ et $T_1$, et $R_2$ et $T_2$, les faisceaux $R_1$ et $T_2$ étant transportés par le guide 12, et les faisceaux $R_2$ et $T_1$ par le guide 13.

Dans le second exemple, la figure 3b montre le trajet des faisceaux lumineux, la lame 20 présentant un indice $n'_2$ légèrement inférieur à l'indice $n_1$ des guides 21 et 24 qui transportent les faisceaux incidents $I_1$ et $I_2$. Ces derniers donnent naissance chacun à un faisceau réfléchi et à un faisceau transmis respectivement $R_1$ et $T_1$, et $R_2$ et $T_2$, les faisceaux $R_1$ et $T_2$ pouvant être transportés par le guide 22, et les faisceaux $R_2$ et $T_1$ par le guide 23 si l'indice $n'_2$ de la lame n'est pas trop différent de l'indice $n_1$ des guides.

Dans le troisième exemple, la figure 3c représente au contraire le cas où, l'indice $n''_2$ de la lame 30 étant très inférieur à l'indice $n_1$, et l'épaisseur $e$ de la lame très faible, les faisceaux incidents $I_1$ et $I_2$ portés par les guides 31 et 34, donnent naissance d'une part à des faisceaux réfléchis et d'autre part à des faisceaux transmis $O_1$ et $O_2$ respectivement dus aux ondes évanescentes, portés par les guides 33 et 32.

En ce qui concerne la structure selon l'invention illustré par les figures 1d et 2d, il est clair qu'un faisceau incident peut être séparé aisément en deux faisceaux dont les angles et les intensités peuvent être choisis à volonté en jouant sur l'indice, l'épaisseur de la lame, et la dimension de sa section par rapport à celle du guide principal.

Il est non moins clair que deux faisceaux peuvent être combinés pour donner au moins un faisceau toujours utilisable, en jouant sur les mêmes paramètres.

C'est pourquoi, la structure selon l'invention peut être avantageusement utilisée pour réaliser des dispositifs interférométriques monolithiquement intégrés sur substrats semi-conducteurs.

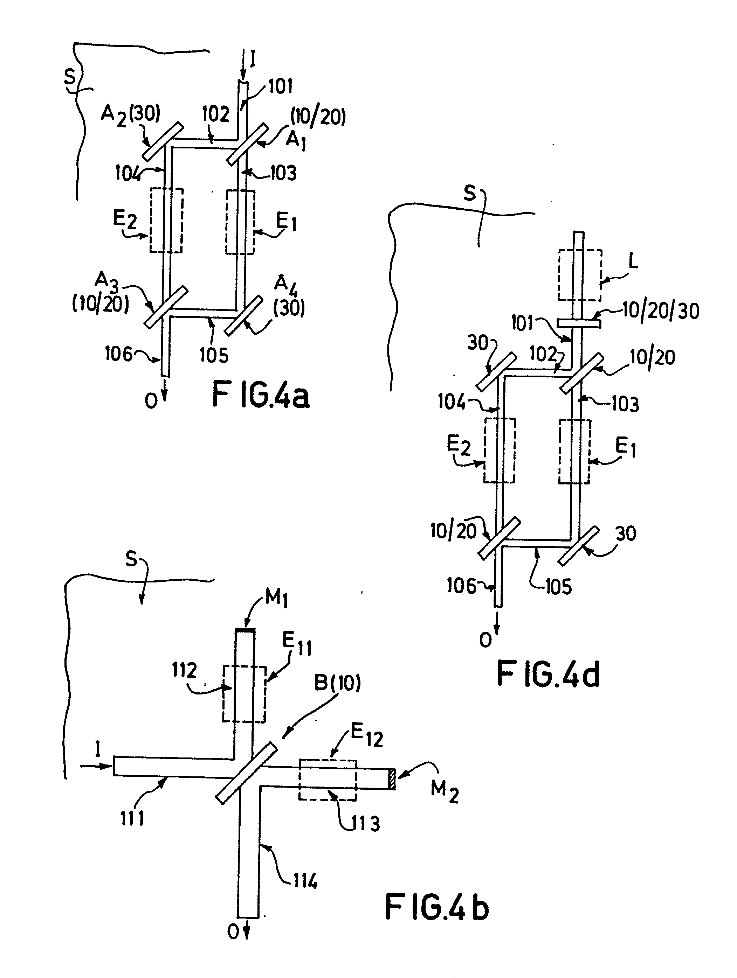

La figure 4a représente un interféromètre du type "Mach-Zehnder" monolithiquement intégré sur un substrat S et incluant des dispositifs décrits précédemment. Une première lame $A_1$ à faces parallèles, du type 10, 20, ou 40 selon l'invention, reçoit un faisceau incident I porté par le guide 101, sous un angle de 45°. La première lame $A_1$ fournit deux faisceaux, l'un réfléchi, l'autre transmis, portés par les guides 102 et 103, la lame $A_2$ de type 30 reçoit le faisceau porté par le guide 102 sous un angle de 45° et fournit un faisceau réfléchi porté par le guide 104. Une lame $A_4$ de type 30 reçoit le faisceau porté par le guide 103 sous un angle de 45° et fournit un faisceau réfléchi porté par le guide 105. La lame $A_3$ enfin reçoit sous un angle de 45°, chacun des faisceaux portés par les guides 104 et 105, et fournit un faisceau O issu de leur recombinaison et porté par le guide de sortie 106.

Des électrodes $E_1$ et $E_2$ placées sur les branches de guide 103 et 104 permettant de moduler la phase de la lumière guidée par chacune de ces branches, et donc de moduler la sortie $O$ en intensité.

Ces électrodes peuvent être constituées par une barrière Schottky, réalisée par évaporation métallique, par exemple de Nickel-Platine-Or (Ni-Pt-Au) en surface des guides de lumière. Cette électrode peut avoir une dimension, parallèlement à l'axe des guides, de 2 à 4 mm, et une dimension, perpendiculairement à l'axe des guides, aussi faible que possible, c'est à dire dépassant aussi peu que faire se peut la dimension latérale des guides eux-mêmes, afin de ne pas constituer une trop forte capacité.

De telles électrodes permettant de créer un champ électrique important au niveau du guide de lumière. Ce champ, par effet électro-optique linéaire, modifie l'indice du guide dans la région de l'électrode, introduisant une différence d'indice

$$v_n = n^3 \times r \times E,$$

relation dans laquelle n est l'indice du guide, E est le champ électrique, et r est une constante électrooptique qui dépend de la direction cristallographique des guides par rapport au plan cristallographique du substrat.

La polarisation des électrodes est obtenue en appliquant une différence de potentiel entre les électrodes Schottky et une électrode de masse réalisée par exemple par un contact ohmique pris le substrat. Ce contact ohmique peut être réalisé à l'aide d'un alliage Or-Germanium-Nickel (Au-Ge-Ni).

La figure 4b représente à titre d'exemple un interféromètre du type "Michelson" monolithiquement intégré sur un substrat S et incluant un seul dispositif décrit précédemment. Une lame B, préférentiellement du type 10, reçoit un faisceau incident I porté par le guide 111, sous un angle de 45°. Cette lame fournit un faisceau réfléchi porté par le guide 112 et un faisceau transmis porté par le guide 113. Les faces extrêmes des guides 112 et 113 sont taillées perpendiculairement à l'axe et dotées par exemple d'une métallisation de manière à ce que les faisceaux portés par ces guides soient réfléchis par les miroirs $M_1$ et $M_2$ ainsi constitués. Les faisceaux portés par les guides 112 et 113 reviennent alors sur la lame B sous un angle de 45° et donne naissance au faisceau de sortie $O$ porté par le guide 114. Des électrodes $E_{11}$ et $E_{12}$ sont placées sur les guides 112 et 113 pour moduler ces faisceaux en phase et la sortie $O$ en intensité.

La figure 4c représente un interféromètre en anneau monolithiquement intégré sur un substrat S et incluant des dispositifs décrits précédemment. Une lame $C_1$, préférentiellement de type 10 reçoit un faisceau I porté par le guide 121 sous un angle de 45° et fournit deux faisceaux l'un réfléchi, l'autre transmis portés par les guides 122 et 126. La lame $C_2$ de type 30, reçoit sous un angle de 45° le faisceau porté par le guide 122 et fournit un faisceau réfléchi porté par le guide 123. Le faisceau porté par le guide 123 est encore réfléchi deux fois respectivement par les lames $C_3$ et $C_4$ de type 30. Le dernier faisceau réfléchi porté par le guide 125 fournit à travers la lame $C_1$ le faisceau de sortie $O$. Des électrodes $E_{21}$, $E_{22}$, $E_{23}$ et $E_{24}$ sont placées sur chaque branche de guide 122, 123, 124 et 125 pour moduler en phase les faisceaux portés par ces guides.

Ce dispositif doté de quatre électrodes au lieu de deux, permet d'obtenir un déphasage plus important que les dispositifs cités précédemment.

La figure 4d, montre comment chacun de ces interféromètres, ici l'interféromètre de type "Mach-Zehnder" étant pris à titre d'exemple, peut être associé à un laser. Un élément laser L couplé à une cavité qui peut être constituée avantageusement d'une lame de type 10 ou 20 ou 30, est placé sur la branche 101 d'entrée du faisceau.

Ce dispositif présente l'avantage de permettre de moduler l'interféromètre au lieu de moduler le laser.

On peut également tirer avantage de ce dispositif en supprimant la cavité laser prévue et en couplant directement le laser à la cavité représentée par l'interféromètre lui-même. On obtient alors une grande cavité entrainant une bonne stabilité du laser c'est-à-dire un bon fonctionnement monomode.

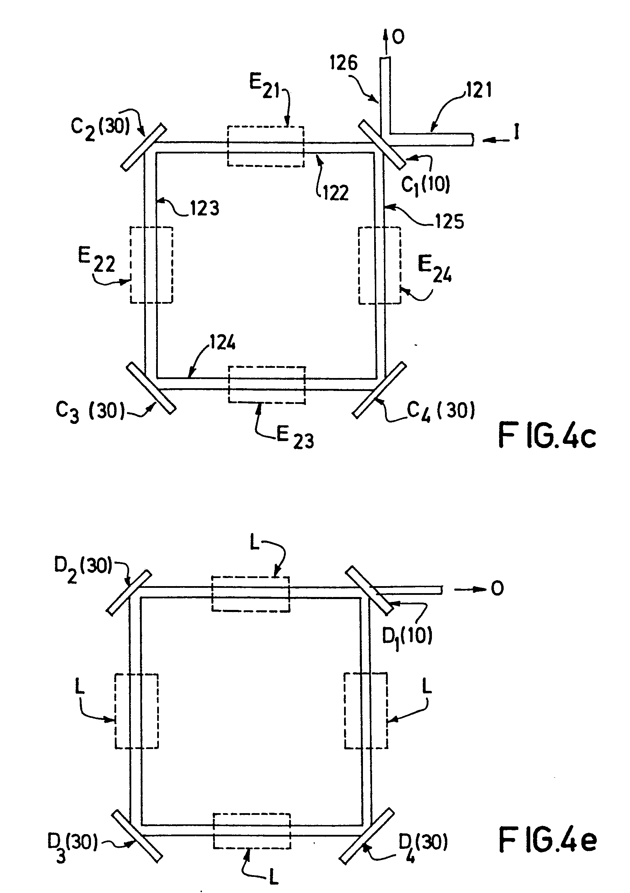

La figure 4e représente une structure laser formée d'une cavité en anneau réalisée à l'aide de dispositifs selon l'invention. Cette structure est très analogue à la structure de l'interféromètre en anneau. Elle comprend une lame $D_1$ semi-réfléchissante de type 10 ou 40 selon l'invention et trois lames à réflexion totale $D_2$, $D_3$, $D_4$ de type 30. Le guidage peut être fait par le gain ou par l'indice. Les lasers en anneau sont connus pour présenter une particulièrement bonne stabilité.

Les différents dispositifs interférométriques décrits précédemment trouvent une application avantageuse dans la réalisation de modulateurs complètement intégrés, pour des sources de lumière, par exemple des lasers. Si le substrat et les guides d'onde sont formés par exemple d'arséniure de gallium, ou d'une façon générale d'un composé $A_{III}B_V$, de très hautes fréquences de fonctionnement sont obtenues, notamment des fréquences comprises entre 5 et 10 GHz.

Ces dispositifs peuvent encore trouver leur application dans la réalisation de capteurs intégrés, si le déphasage appliqué sur les branches de l'interférmètre, dépend d'une grandeur physique.

Un procédé de réalisation de la structure de couplage selon l'invention est donné à titre d'exemple. Ce procédé peut être utilisé aussi bien s'il est associé à une technologie de guides d'onde enterrés, qu'à une technologie de guides d'onde érigés, ces derniers pouvant encore être réalisés soit par gravure par exemple chimique, soit par croissance épitaxiale.

Le procédé de réalisation proposé comprend les étapes suivantes, dont:

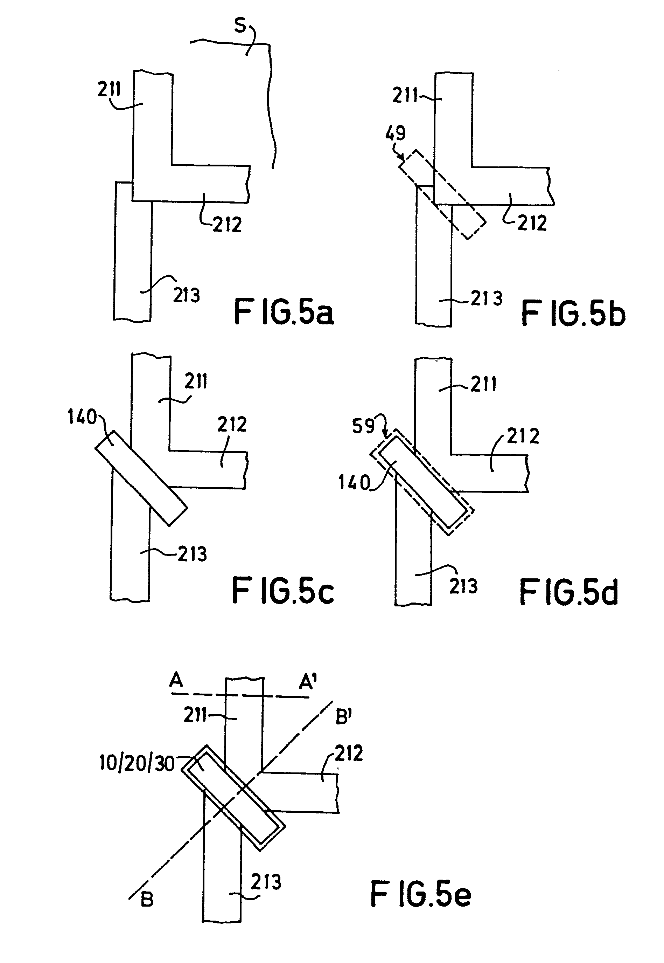

a) réalisation sur un substrat semi-conducteur S, ce substrat étant soit de type n$^+$, soit semi-isolant et pourvu d'une couche de confinement n$^+$, des guides principaux d'entrée 211 et secondaires de sortie 212 et 213, conformément aux orientations relatives prévues par le calcul (figure 5a).

Ce substrat S est choisi de préférence en arséniure de gallium monocristallin (GaAs). Le matériau de type n$^+$ peut être dopé à $3.10^{18}$ porteurs par cm$^3$.

Les guides d'entrée 211, et les guides secondaires de sortie 212, 213, sont réalisés de façon avantageuse sur une face cristallographique (100) du substrat S. Ils peuvent être orientés, pour les guides 213 et 211, par exemple selon les directions cristallographiques [110] et pour le guide 212, selon l'axe cristallographique [1Ī0]. Le guide 212 est alors perpendiculaire aux guides 211 et 213. La lame semi-réfléchissante réalisée à la suite, devra alors présenter des faces parallèles au plan cristallographique (110) de manière à être inclinée à 45° des guides.

Pour réaliser les guides sur le substrat S, il peut être employé la méthode décrite dans la publication intitulée "Low loss waveguides grown on GaAs using localized vapor phase epitaxy" par M. Erman et alii. dans "Applied Physic Letters, 43(10), 15 NOV 83, p. 894—895", ou bien encore cette même méthode décrite dans "Journal of Crystal Growth, 13/14, 325 (1972)" par J. P. Chané et alii.

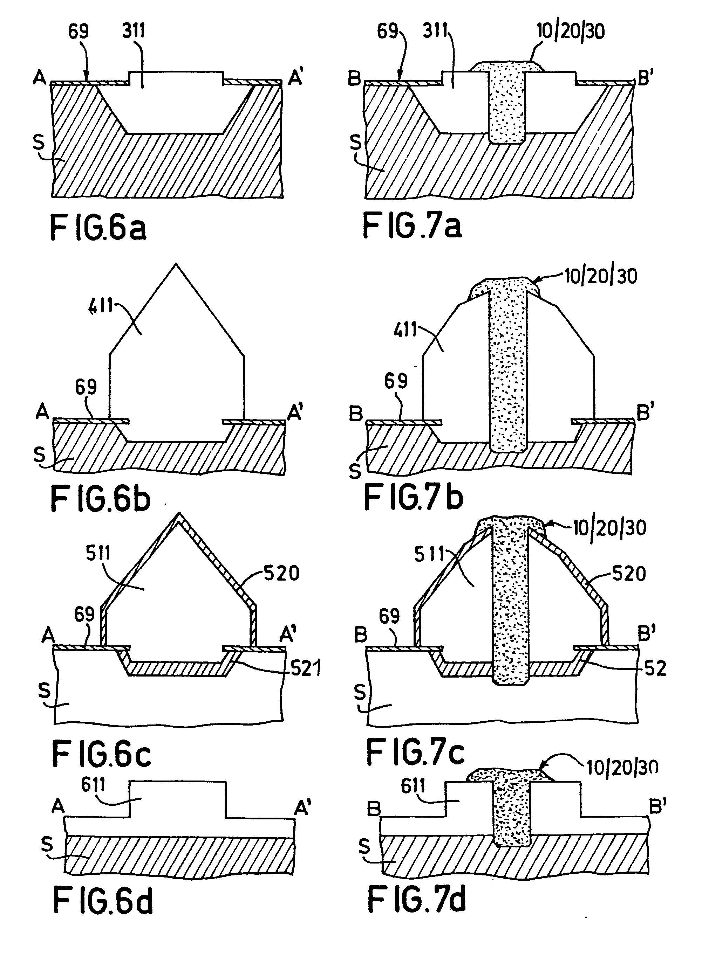

Un masque 69, comme il est montré sur les figures 6, est déposé en surface de la face cristallographique (100) du substrat S. Ce masque peut être par exemple, une couche de l'ordre de 100 nm de diélectrique tel que le nitrure de silicium ($Si_3N_4$) ou la silice ($SiO_2$). Des sillons sont ouverts dans cette couche diélectrique aux emplacements prévus pour les guides 211, 212, 213. La largeur de ces ouvertures, orientées comme il a été dit selon les axes cristallographiques [110] ou [1Ī0] est de l'ordre de 3 μm.

Une gravure, par exemple chimique, est alors pratiquée dans ces sillons de manière à creuser des cannelures dans le substrat, d'une profondeur d'environ 5 μm.

Puis la plaquette d'arséniure de gallium (GaAs) ainsi préparée est portée dans un réacteur d'épitaxie en phase vapeur.

Afin de parfaire les facettes cristallographiques qui sont apparues alors de la gravure précédente et qui forment les flancs des cannelures, un décapage anisotrope est effectué dans le réacteur d'épitaxie. Ce décapage peut être de l'ordre de 100 nm. On notera en effet que, selon les conditions thermodynamiques imposées au réacteur, ce dernier effectue soit un décapage, soit une croissance épitaxiale.

A la suite du décapage, une croissance épitaxiale est réalisée dans les cannelures de manière à former les rubans d'arséniure de gallium, de préférence de type n$^-$ qui constituent les guides de lumière. L'arséniuire de gallium de type n$^-$ montre un dopage de préférence inférieur à $10^{15}$ porteurs par cm$^3$.

Les étapes du procédé de réalisation de la structure selon l'invention se poursuivent alors par:

b) réalisation d'un masque 49 délimitant la forme et l'orientation prévues pour la lame à faces parallèles (figure 5b).

c) gravure par exemple chimique dans l'ouverture du masque 49, sur une profondeur fonction de la quantité de lumière que l'on désire obtenir pour le faisceau transmis, et perpendiculairement au plan du substrat S (figure 5c), de manière à former une lame à faces parallèles 140 exempte de matériau.

Si la lame à faces parallèles choisie est une lame dépourvue de matériau, pour constituer par exemple une lame à réflexion totale, la réalisation est alors terminée.

Si au contraire un matériau est choisi pour constituer la lame, le procédé de réalisation se poursuit par les étapes suivantes:

d) réalisation d'un masque 59 délimitant une surface à peine plus grande que la surface de la lame à faces parallèles (figure 5d).

e) dépôt dans l'ouverture de ce masque du matériau choisi pour la lame, repérée alors 10, 20 ou 30 (figure 5e).

Ce dépôt peut être fait de toute manière compatible avec le matériau choisi.

Le matériau utilisé pour réaliser les masques 49, 59 peut être par exemple le nitrure de silicium (@$Si_3N_4$) ou la silice ($SiO_2$).

Les différentes figures 6 représentent en coupe des guides d'onde réalisés à l'aide de technologies diverses et les différentes figures 7 montrent en regard des dispositifs de couplage à lame totale obtenus avec de tels guides.

La figure 6a montre en coupe un guide 311, en arséniure de gallium (GaAs) de type n$^-$, réalisé dans l'ouverture d'un masque 69 et entièrement enterré dans le substrat S en arséniure de gallium de type n$^+$. Ce guide forme ainsi une structure du type dit "PLANAR".

La figure 7a montre en coupe la lame à faces parallèles associée à ces guides. Le guide étant de type enterré, la lame est également enterrée. La lame peut être réalisée par exemple par croissance épitaxiale dans l'ouverture 140 (figure 5c) d'un composé $A_{III}B_V$ d'indice supérieur à celui de l'arséniure de gallium. Il n'est pas nécessaire qu'il y ait accord de maille cristalline entre les deux composés. On obtient alors une lame de type 10 décrit précédemment. Par contre, si la lame est obtenue par exemple par croissance épitaxiale d'arséniure de gallium et d'aluminium (GaAlAs) dont l'indice de réfraction est légèrement inférieur à celui de l'arséniure de gallium (GaAs), alors la lame est du type 20. La lame peut encore être réalisée par remplissage de la cavité 140 avec un diélectrique. Les diélectriques connus ont couramment un indice de réfraction voisin de 2, lequel est donc très inférieur à l'indice de l'arséniure de gallium qui est de l'ordre de 3,5. On obtient alors des lames du type 30. Toute l'échelle des indices peut être couverte en dopant des diélectriques, ou en utilisant des semi-conducteurs ternaires ou quaternaires.

La figure 6b montre en coupe un guide 411 obtenu par croissance épitaxiale anisotrope d'un ruban cristallin de type $n^-$ d'arséniure de gallium, à partir d'un substrat d'arséniure de gallium de type $n^+$. La cannelure, à partir de laquelle est effectuée la croissance anisotrope lacalisée, peut être moins profonde que dans le cas de la figure 6a. En effet le guide est ici principalement érigé au dessus du substrat.

La figure 7b montre en coupe un dispositif de couplage obtenu avec un tel guide. La lame à faces parallèles est ici, de même que le guide, érigée au dessus du substrat. Tous les matériaux indiqués précédemment pour réaliser la lame sont valables dans tous les cas de figures.

La figure 6c montre en coupe un guide 511 obtenu par croissance épitaxiale anisotrope à partir d'une sous-gravure dans un substrat S en arséniure de gallium, cette sousgravure étant munie d'une couche de confinement 521 de type $n^+$. Le guide 511 de type $n^-$ reçoit en outre une couche de confinement supérieure 520, de type $n^+$. La figure 7c montre en coupe le dispositif de couplage obtenu dans ce cas.

La figure 6d montre en coupe un guide d'onde 611 obtenu par gravure lente d'une couche épitaxiale de type $n^-$ réalisée sur un substrat S en arséniure de gallium de type $n^+$. La figure 7d montre le dispositif de couplage obtenu dans ce cas.

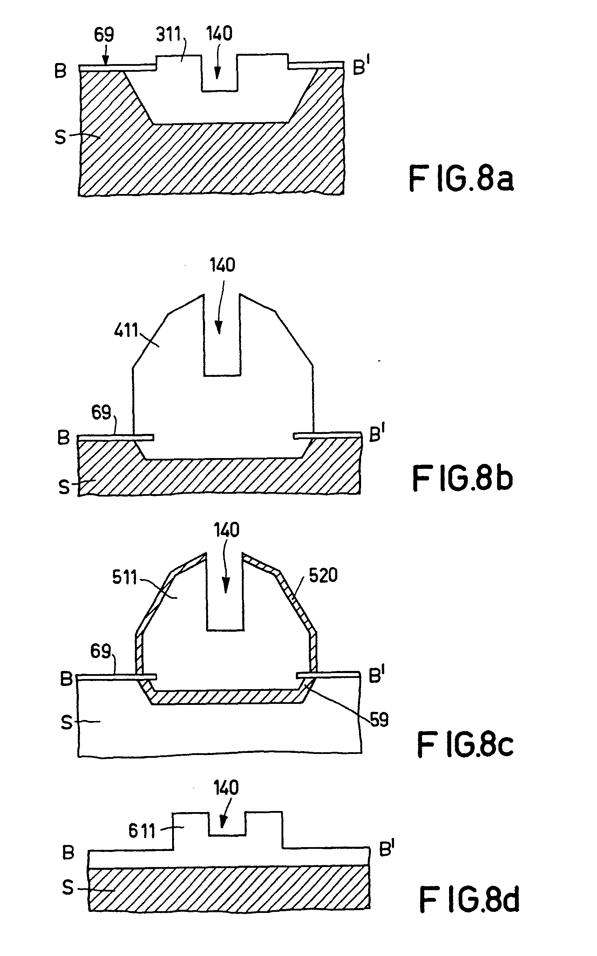

Les figures 8a, 8b, 8c, 8d montrent en coupe, les mêmes guides que ceux qui sont représentés sur les figures 6a, 6b, 6c, 6d mais associés ici selon l'invention à une lame à faces parallèles 140 dont la profondeur est inférieure à la hauteur du guide de lumière, cette lame à faces parallèles étant de plus dans ce cas une lame dépourvue de matériau formée par simple gravure anisotrope.

**Revendications**

1. Structure de couplage entre un guide d'onde lumineuse principal (41) et deux guides d'onde lumineuse secondaires (42, 43) intégrés sur un substrats, constituée par une lame (40) a faces parallèles perpendiculaires au substrat, ladite lame présentant un indice différent de celui des guides et étant disposée en travers du guide principal (41), l'un (43) des guides secondaires étant diposé sensiblement dans le prolongement du guide principal et l'autre (42) des guides secondaires étant disposé symetriquement au guide principal par rapport à la normlale à la lame de façon à recueillir les parties du faisceau lumineux issu du guide principal qui sont respectivement transmise et réfléchie par la lame, ladite structure étant caractérisée en ce que les guides (41, 42, 43) sont en un matériau semiconducteur et sont intégrés sur un substrats semiconducteur formant ou muni d'une couche de confinement (521), en ce que la section utile de la lame (40) est inférieure à la section du guide principal (41) pour permettre la propagation directe d'une partie du faisceau lumineux issu du guide principal dans le guide secondaire (43) placé dans le prolongement du guide principal, et en ce que la lame (40) présente un indice de réfraction inférieur à l'indice du guide principal et une épaisseur appropriée de façon à assurer la réflexion totale du faisceau incident qu'elle reçoit, formant ainsi un miroir à réflexion totale orienté pour réfléchir la partie du faisceau issu du guide principal qui frappe ce miroir vers l'autre guide secondaire.

2. Structure selon la revendiction 1, caractérisée en ce que les guides secondaires présentent le même indice de réfraction que le guide principal, en ce que l'indice de refraction ainsi que l'épaisseur de lame sont choisis pour assurer la réflexion totale de la partie du faisceau incident qu'elle reçoit pour un angle d'incidence de 45° et en ce que la section utile de la lame est choisie pour donner des intensités relatives des faisceaux réfléchis et transmis voisines de 50%.

3. Structure selon l'une des revendications 1 ou 2, caractérisée en ce que le substrat est en arséniure de gallium (GaAs) de type de conductivité $n^+$ ou muni d'une couche de confinement de type de conductivité $n^+$, et les guides sont en arséniure de gallium (GaAs) de type de conductivité $n^-$.

4. Structure selon la revendication 3 dans la mesure où cette dèrniere depend de selon la revendication 2, caractérisée en ce que les guides sont réalisés sur une face cristallographique (100) du subtrat selon des directions cristallographiques respectives [110] et $[\overline{1}\overline{1}0]$.

5. Structure selon l'une des revendications 3 ou 4, caractérisée en ce que, pour obtenir une lame à faces parallèles d'indice inférieur à celui des guides, cette lame est formée d'un matériau choisi parmi l'arséniure de gallium et d'aluminium (GaAlAs) et un diélectrique, ou est exempte de matériau.

6. Procédé de réalisation d'une structure conforme à l'une des revendications 1 à 5, caractérisé en ce qu'il comprend au moins les étapes de:

a) réalisation par croissance épitaxiale anisotrope, à partir d'un substrat semiconducteur (S), ce substrat étant de type $n^+$, ou bien semi-isolant et muni d'une couche de confinement $n^+$, d'un guide d'onde principal (211) et de deux guides d'onde secondaires (212, 213) conformément aux orientations relatives prévues pour les faisceaux d'entrée et de sortie;

b) réalisation d'un premier masque (49) délimitant la forme et l'orientation prévues pour la lame (140) à faces parallèles; et,

c) réalisation d'une gravure dans l'ouverture du premier masque, perpendiculairement au plan du substrat (S), de manière à former une lame (140) à faces parallèles exempte de matériau, ladite lame étant gravée sur une profondeur fonction de la quantité du faisceau incident qui doit être transmis sans rencontrer la lame.

7. Procédé de réalisation selon la revendication 6, caractérisé en ce qu'il comprend en outre les étapes de:

d) réalisation d'une second masque (59) de surface au moins égale à la surface du premier masque (49); et,

e) dépôt, dans l'ouverture du seocnd masque, du matériau choisi pour réaliser la lame à faces parallèles.

## Patentansprüche

1. Kopplungsanordnung zwischen einem Haupt-Lichtwellenleiter (41) und zwei auf einem Träger (5) integrierten Hilfs-Lichtwellenleitern (42, 43), wobei diese Anordnung durch eine Platte (40) mit parallelen, winkelrecht auf dem Träger stehenden Flächen gebildet wird, wobei diese Platte eine andere Brechzahl aufweist als die Wellenleiter und quer zu dem Haupt-Lichtwellenleiter (41) angeordnet ist, wobei der eine (43) der Hilfs-Lichtwellenleiter im wesentlichen fluchtend zu dem Haupt-Lichtwellenleiter angeordnet ist und der andere (42) der Hilfs-Lichtwellenleiter gegenüber der Normalen auf der Platte derart symmetrisch angeordnet ist, daß diejenigen Teile des von dem Haupt-Wellenleiter herrührenden Lichtstrahles, die von der Platte hindurchgelassen bzw. reflektiert werden, angesammelt werden, wobei die genannte Anordnung dadurch gekennzeichnet ist, daß die Wellenleiter (41, 42, 43) aus einem Halbleitermaterial bestehen und auf einem Halbleiterträger (S) integriert sind, der eine Aufschlußschicht (521) bildet oder mit einer Aufschlußschicht versehen ist, daß der nützliche Querschnitt der Platte (40) kleiner ist als der Querschnitt des Haupt-Wellenleiters (41) um die unmittelbare Fortpflanzung eines Teils des von dem Haupt-Wellenleiter herrührenden Strahles in dem Hilfs-Wellenleiter (43), der zu dem Haupt-Wellenleiter fluchtend liegt, zu ermöglichen, und daß die Platte (40) eine Brechzahl aufweist, die niedriger ist als die des Haupt-Wellenleiters und eine derart geeignete Dicke, daß gewährleistet wird, daß der auf der Platte eintreffende Strahl total reflektiert wird, wobei auf dieser Weise ein Spiegel für Totalreflexion gebildet wird, der derart ausgerichtet ist, daß der diesen Spiegel treffende Teil des von dem Haupt-Wellenleiter herrührenden Strahles zum anderen Hilfs-Wellenleiter hin reflektiert wird.

2. Anordnung nach Anspruch 1, dadurch gekennzeichnet, daß die Hilfs-Wellenleiter dieselbe Brechzahl wie der Haupt-Wellenleiter haben, daß die Brechzahl sowie die Dicke der Platte derart gewählt worden sind, daß gewährleistet wird, daß derjenige Teil des auftreffenden Strahles, der mit einem Auftreffwinkel von 45° auftrifft total reflektiert wird, und daß der nützliche Querschnitt der Platte derart gewählt worden ist, daß eine relative Menge reflektierter und durchgelassener Strahlen von 50% erhalten wird.

3. Anordnung nach einem der Ansprüche 1 oder 2, dadurch gekennzeichnet, daß das Substrat aus Galliumarsenid vom $n^+$-Leitungstyp besteht oder mit einer Aufschlußschicht vom $n^+$-Leitungstyp versehen ist, und dei Wellenleiter aus Galliumarsenid vom $n^-$-Leitungstyp sind.

4. Anordnung nach Anspruch 3, insofern abhängig vom Anspruch 2, dadurch gekennzeichnet, daß die Wellenleiter auf einer Kristallfläche (100) des Trägers entsprechend den betreffenden Kristallrichtungen [110] und [110] ausgebildet sind.

5. Anordnung nach einem der Ansprüche 3 oder 4, dadurch gekennzeichnet, daß zum Erhalten einer Platte mit parallelen Flächen und mit einer Brechzahl, die niedriger ist als die der Wellenleiter, diese Platte aus einem Material gewählt aus Gallium-Aluminiumarsenid (GaAlAs) und einem Dielektrikum gebildet oder frei von Material ist.

6. Verfahren zum Herstellen einer Anordnung nach einem der Ansprüche 1 bis 5, dadurch gekennzeichnet, daß das Verfahren wenigstens die nachfolgenden Verfahrensschritte aufweist:

a) das durch anisotropes epitaxiales Anwachsen auf einem $n^+$-leitenden oder gut halbisolierenden und mit einer einhüllenden Schicht versehenen Halbleiterträger (S) Bilden eines Haupt-Wellenleiters (211) und zweier Hilfs-Wellenleiter (212, 213) entsprechend den relativen Orientierungen für die Eingangs- und Ausgangsstrahlen;

b) das Bilden einer ersten Maske (49), welche die Form und die Orientierung der Platte (140) mit parallelen Flächen bestimmt; und

c) das Durchführen eines Atzvorgangs in der Öffnung der ersten Maske senkrecht zu der Ebene des Trägers (S), derart, daß eine Platte (140) mit parallelen Flächen ohne Material gebildet werden, wobei die genannte Platte bis zu einer Tiefe geätzt wird, die eine Funktion der Menge auftreffender, ohne Berührung der Platte zu übertragender Strahlen ist.

7. Verfahren nach Anspruch 6, dadurch gekennzeichnet, daß es außerdem die nachfolgenden Verfahrensschritte aufweist:

d) das Bilden einer zweiten Maske (59) mit einer Oberfläche, die der Oberfläche der ersten Maske (49) wenigstens entspricht, und

e) das in der Öffnung der zweiten Maske Niederschlagen von Material, das gewählt worden ist um die Platte mit parallelen Flächen zu bilden.

## Claims

1. A coupling structure between a main light waveguide (41) and two secondary light waveguides (42, 43) integrated on a substrate (S) and formed by a strip (40) having parallel surfaces at right angles to the substrate, which strip has a refractive index different from that of the waveguides and is disposed transversely to the main waveguide (41), while one (43) of the secondary waveguides is disposed substantially in the extended direction of the main waveguide and the other (42) of the secondary waveguides is arranged symmetrically with the main waveguide relative to the perpendicular of the strip so as to receive those portions of the light beam issuing from the main waveguide which are transmitted and reflected by the strip, respectively, which structure is characterized in that the waveguides (41, 42, 43) are of semiconductor material and are integrated on a semiconductor substrate (S) which forms or is provided with a confinement layer (521), in that the useful cross-section of the strip (40) is smaller than the cross-section of the main waveguide (41) in order to permit of the dierct propagation of part of the light beam issuing from the main waveguide into the secondary waveguide (43) positioned in the extended direction of the main waveguide, and in that the strip (40) has a refractive index which is lower than that of the main waveguide and a thickness suitable for ensuring total reflection of the incident light beam which it receives, thus forming a mirror with total reflection oriented for reflecting the portion of the beam which issues from the main waveguide and hits this mirror towards the other secondary waveguide.

2. A structure as claimed in Claim 1, characterized in that the secondary waveguides have the same refractive index as the main waveguide, in that the refractive index and the thickness of the strip are so chosen as to ensure total reflection of that portion of the incident beam which it receives at an angle of incidence of 45°, and in that the useful cross-section of the strip is so chosen as to yield relative intensities of the reflected and transmitted beams close to 50%.

3. A structure as claimed in Claim 1 or 2, characterized in that the substrate is made of gallium arsenide (GaAs) of the $n^+$ conductivity type or is provided wiht a confinement layer of the $n^+$ conductivity type, while the waveguides are made of gallium arsenide (GaAs) of the $n^-$ conductivity type.

4. A structure as claimed in Claim 3 to the extent to which the latter is dependent on Claim 2, characterized in that the waveguides are realized on a crystallographic (100) surface of the substrate in the respective crystallographic directions [110] and [1$\bar{1}$0].

5. A structure as claimed in any one of the Claims 3 and 4, characterized in that, in order to obtain a strip having parallel surfaces with a refractive index lower than that of the waveguides, this strip is formed from a material chosen from gallium-aluminium arsenide (GaAlAs) and a dielectric material, or is void of material.

6. A method of manufacturing a structure as claimed in any one of Claims 1 to 5, characterized in that it comprises at least the steps of:

a) forming a main waveguide (211) and two secondary waveguides (212, 213), in accordance with the relative orientations provided for the input and output beams, by anisotropic epitaxial growth on a semiconductor substrate (S), which substrate is of the $n^+$ type or semi-insulating and provided with an $n^+$ confinement layer;

b) forming a first mask (49) defining the form and the orientation envisaged for the strip (140) having parallel surfaces; and

c) carrying out an etching treatment in the opening of the first mask at right angles to the plane of the substrate (S) in such a manner that a strip (140) having parallel surfaces and void of material is formed, this strip being etched over a depth which is a function of the quantity of the incident beam which is to be transmitted without meeting the strip.

7. A method as claimed in Claim 6, characterized in that it moreover comprises the following steps:

d) forming a second mask (59) having a surface area at least equal to the surface area of the first mask (49); and

e) depositing in the opening of the second mask the material chosen to form the strip having parallel surfaces.

F IG.1a

F IG.1b

F IG.1c

1

FIG.1d

FIG.2a

FIG.2b

FIG.3a

FIG.3b

FIG.3c

3

FIG.4a

FIG.4b

FIG.4d

FIG.4c

FIG.4e

FIG.5a

FIG.5b

FIG.5c

FIG.5d

FIG.5e

FIG.6a

FIG.6b

FIG.6c

FIG.6d

FIG.7a

FIG.7b

FIG.7c

FIG.7d

7

69 311 140

B ——————— B'

S

FIG.8a

140

411

69

B ——————— B'

S

FIG.8b

140

511 520

69

B ——————— B'

S

59

FIG.8c

140

611

B ——————— B'

S

FIG.8d